# EUROPÄISCHE PATENTSCHRIFT

(11) **EP 1 590 520 B1**
(45) Veröffentlichungstag und Bekanntmachung des Hinweises auf die Patenterteilung: **28.02.2007**
(21) Anmeldenummer: 03815033.0
(22) Anmeldetag: 17.12.2003
(51) Int. Cl.: D03J 1/00, D06H 3/08, G01N 21/898, G05B 19/12

(54) **VERFAHREN UND VORRRICHTUNG ZUR ERKENNUNG VON FEHLERN IN TEXTILEN GEBILDEN**
METHOD AND DEVICE FOR RECOGNIZING DEFECTS IN TEXTILE STRUCTURES
PROCEDE ET DISPOSITIF POUR DETECTER DES DEFAUTS DANS DES STRUCTURES TEXTILES

(30) Priorität: 08.01.2003 CH 25032003
(43) Veröffentlichungstag der Anmeldung: 02.11.2005
(73) Patentinhaber: Uster Technologies AG, 8610 Uster (CH)
(72) Erfinder: PALMER, Tim, c/o The Technology Partnership Plc, Melbourn, Royston Hertfordshire SGB 6EE (GB); EMCH, Beat, 8193 Eglisau (CH)
(86) Internationale Anmeldenummer: PCT/CH2003/000820
(87) Internationale Veröffentlichungsnummer: WO 2004/063446

(56) Entgegenhaltungen:
- WO-A-02/086214
- US-A- 4 643 230
- US-A- 4 702 283
- US-A- 5 408 076
- US-A- 6 100 989
- US-B1- 6 501 086
- PATENT ABSTRACTS OF JAPAN Bd. 015, Nr. 096 (C-0812), 7. März 1991 (1991-03-07) -& JP 02 307966 A (SANDO IRON WORKS CO LTD), 21. Dezember 1990 (1990-12-21)

## Beschreibung

Die Erfindung betrifft ein Verfahren zur Erkennung von Fehlern in einem textilen Gebilde, bei dem Signale vom textilen Gebilde abgeleitet und die Signale vom textilen Gebilde mindestens mit vorgegebenen Parametern verarbeitet werden, sowie eine Vorrichtung zur Erkennung von von Fehlern in einem textilen Gebilde mit einem Sensor, einer Verarbeitungseinheit und einer Ein/Ausgabeeinheit, wobei die Verarbeitungseinheit mit dem Sensor und mit der Ein/Ausgabeeinheit verbunden und zur Verarbeitung von Signalen, die durch den Sensor am textilen Gebilde erfasst werden, mindestens mit vorgegebenen Parametern ausgebildet und angeordnet ist, und ein Ausgangssignal erzeugt, das vorhandene Fehler im textilen Gebilde anzeigt.

Fehler in textilen Gebilden können in verschiedener Art auftreten. Als Beispiele sind Veränderungen der physischen Struktur der textilen Probe, Farbvariationen, fehlerhaftes Garn, einzelne Garne mit falschen Abmessungen, die in das textile Gebilde eingeführt sind, Fremdstoffe im Garn oder im textilen Gebilde usw. zu nennen. Fehler stören üblicherweise das Erscheinungsbild des textilen Gebildes und springen dem menschlichen Betrachter, dem solche textile Gebilde vorgelegt werden, meistens ins Auge. Deshalb sind solche Fehler unerwünscht und sollten so früh als möglich ausgemerzt werden.

Ein solches Verfahren und eine Vorrichtung ist bereits aus der WO 98/08080 bekannt wobei Bilder, die vom textilen Gebilde aufgenommen werden in Helligkeitswerte von Bildpunkten umgewandelt werden. Solche Werte werden einem als neuronales Netzwerk ausgebildeten Filter zugeführt. Um Filterparameter nach und nach an das textile Gebilde anzupassen, das dem Sensor oder der Kamera gerade vorgelegt wird, wird eine Lernphase eingeleitet, während der verschiedene Fehlerarten im textilen Gebilde wie auch fehlerfreie Abschnitte des textilen Gebildes dem Sensor vorgelegt werden. Während diesem Vorgang, der vor der eigentlichen Fehlererkennung durchgeführt wird, werden die Parameter eines. Filters nach und nach angepasst. So ist dieser Vorgang als Lernphase für das Filter zu betrachten. Während der Lernphase werden als richtig betrachtete Ausgangssignale der Vorrichtung eingegeben, die dann Eingangssignale mit richtigen Ausgangssignalen vergleicht, um die Parameter zu erhalten, die für die ordentliche Verarbeitung benötigt werden.

Mit diesem bekannten Verfahren und der Vorrichtung muss eine solche Lernphase jedesmal dann durchgeführt werden, wenn ein neues Gewebe oder Flächengebilde zur Fehlererkennung eingeführt wird. Dieser Vorgang braucht viel Zeit und während dieser Zeit ist es nicht möglich, die Prüfeinrichtung für die normale Prüfung zu verwenden.

Die Erfindung wie sie in den Patentansprüchen beansprucht wird, soll diese Nachteile überwinden. Sie löst die Aufgabe, Parameter des Verfahrens und der Vorrichtung zur Erkennung von Fehlern in einem textilen Gebilde besonders einfach und schnell an ein bestimmtes zur Fehlererkennung vorgelegtes textiles Gebilde anzupassen.

Diese Aufgabe wird durch das vorliegende Verfahren gemäss Anspruch 1 gelöst, bei dem vorgegebene Parameter zur Anpassung des Verfahrens und der Vorrichtung an ein bestimmtes textiles Gebilde in lesbarer Darstellung, z. B. in numerischer und/oder grafischer Form auf einem festen Datenträger abgelegt werden. Dieser Datenträger wird einem Sensor vorgelegt, der die numerischen und/oder grafischen Darstellungen vom Datenträger liest und damit die Parameter eingibt. Diese Parameter werden in einem Speicher einer Verarbeitungseinheit gespeichert. Dann wird für die normale Arbeitsweise ein textiles Gebilde dem Sensor vorgelegt um geprüft zu werden. Der Sensor erfasst Signale oder Bilder dieses textilen Gebildes und gibt diese an die Verarbeitungseinheit ab. Diese Verarbeitungseinheit verarbeitet die Signale oder Bilder und benützt dazu vorgegebene Parameter und eventuell auch anpassbare Parameter welche im Speicher gespeichert sind und vorgängig vom festen Datenträger gelesen wurden.

Gemäss der vorliegenden Erfindung nach Anspruch 3 weist die Vorrichtung einen Sensor, eine Verarbeitungseinheit und eine Ein/Ausgabeeinheit auf, wobei die Verarbeitungseinheit mit dem Sensor und mit der Ein/Ausgabeeinheit verbunden und zur Verarbeitung von Signalen, die durch den Sensor am textilen Gebilde erfasst werden, mindestens mit vorgegebenen Parametern ausgebildet und angeordnet ist, und ein Ausgangssignal erzeugt, das vorhandene Fehler im textilen Gebilde anzeigt. Der Sensor ist zum Lesen der vorgegebenen Parameter in numerischer oder grafischer Form von einem festen Datenträger ausgebildet und angeordnet, der ein Blatt mit Instruktionen sein kann und der seinerseits so ausgebildet ist, dass er dem Sensor vorgelegt werden kann. Vorzugsweise ist der Sensor als einziger Sensor ausgebildet ist, der Signale vom zu prüfenden textilen Gebilde erfassen und vorgegebene Parameter in numerischer oder grafischer Form vom festen Datenträger ablesen kann. Auf dem festen Datenträger können verschiedene Zonen, jede für verschiedenartige Angaben vorgesehen sein. So soll eine Zone zur Speicherung von Parametern vorgesehen sein, die bei der Verarbeitung von Signalen vom textilen Gebilde verwendet werden.

Die durch die Erfindung erreichten Vorteile sind insbesondere darin zu sehen, dass der Vorgang der Anpassung der Parameter des Prüfgerätes sehr wenig Zeit beansprucht. Deshalb wird die normale Arbeitsweise der Vorrichtung nicht für längere Zeiten unterbrochen, wenn ein neues textiles Gebilde zur Prüfung vorgesehen wird. Zudem ist das Eingeben von vorgegebenen Parametern in die Vorrichtung sehr einfach und kann durch Bedienungspersonal durchgeführt werden, das zur Bedienung angelernt ist. Das Anlernen ist ebenfalls sehr einfach. Das Erstellen eines festen Datenträgers wie z.B. einem Blatt oder einer Karte mit Instruktionen kann von der Vorrichtung getrennt, durch Spezialisten erfolgen, die mit an sich bekannten Geräten wie z.B. Rechnern (PC's), Scannern, Druckern usw. arbeiten.

Im folgenden wird die Erfindung anhand eines Beispiels und mit Bezug auf die beiliegenden Zeichnungen näher erläutert, wobei
Fig. 1 eine perspektivische Ansicht einer erfindungsgemässen Vorrichtung,
Fig. 2 eine schematische Darstellung eines Teils der Vorrichtung gemäss Fig. 1,
Fig. 3 eine Detailansicht der Vorrichtung gemäss Fig. 1,
Fig. 4 eine Darstellung eines festen Datenträgers wie er zur Eingabe vorgegebener Parameter verwendet wird und
Fig. 5 eine Ansicht weiterer Geräte zeigt, die im Zusammenhang mit der Erfindung benützt werden können.

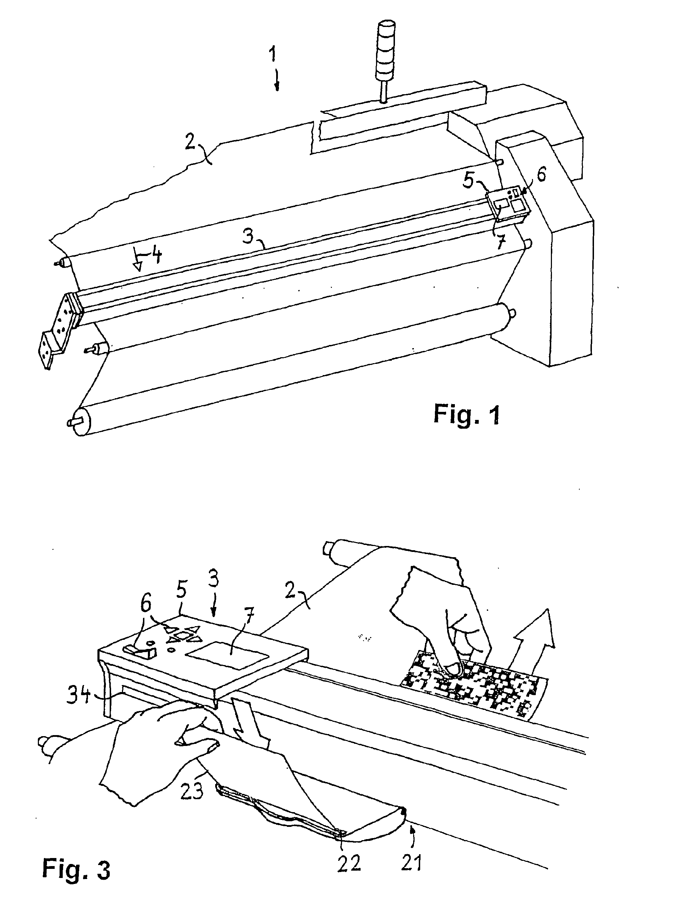

Fig. 1 zeigt einen Teil einer Webmaschine 1 auf der in bekannter Weise ein textiles Gebilde, wie ein Gewebe 2, gewoben wird. Eine Vorrichtung 3 zur Erkennung von Fehlern im Gewebe 2 ist auf der Webmaschine 1 befestigt und erstreckt sich vorzugsweise über die ganze Breite des Gewebes 2 in der Webmaschine 1. Das Gewebe 2 bewegt sich in einer Richtung, die durch einen Pfeil 4 angegeben wird. Die Vorrichtung 3 umfasst auch eine kleine Ein/Ausgabeeinheit 5 mit Tasten 6 zum Starten des Betriebes der Vorrichtung 3 und einer Anzeigeeinheit 7 für Meldungen im Zusammenhang mit dem Betrieb derselben.

Fig. 2 zeigt eine schematische und vereinfachte Darstellung von Elementen der Vorrichtung 3. Ein Sensor 8 wird nahe an einem textilen Gebilde 9 gezeigt, welches ein Gewebe, ein Tuch, ein Vlies oder eine ähnliches textiles Gebilde sein kann. Eine Verarbeitungseinheit 10 ist über je einen Bus 12 und 13 an den Sensor 8 und an eine Ein/Ausgabeeinheit 11 angeschlossen. Die Verarbeitungseinheit 10 umfasst einen Speicher 14, eine Eingangsschnittstelle 15 und einen Prozessor 16. Die Eingangsschnittstelle 15 ist über den Bus 12 an den Sensor 8 angeschlossen. Die Übertragung von Daten zwischen diesen Elementen der Verarbeitungseinheit 10 kann insbesondere aber nicht ausschliesslich wie mit Pfeilen 17, 18, 19 angegeben erfolgen. Der Sensor 8 ist vorzugsweise als CCD-Kamera, als CIS (Contact Image Sensor) oder in anderer Weise als Abbildungssensor ausgebildet. In Fällen, in denen der Sensor 8 ein analoges Signal erzeugt, das vom textilen Gebilde 9 abgeleitet ist, kann auch ein Analog/Digital-Wandler 20 vorgesehen sein. Der Sensor 8 kann Signale vom zu prüfenden textilen Gebilde 9 oder von einem festen Datenträger 23 anderer Art lesen, der dem Sensor 8 vorgelegt wird. Gemäss einer anderen Ausführung kann der Sensor 8 auch einen speziellen Sensor 8a umfassen, der sich über einen beschränkten Bereich 21 erstreckt und zum Lesen von Signalen von einem festen Datenträger 23 ausgebildet ist, der ihm in diesem Bereich 21 vorgelegt wird. Die Verarbeitungseinheit 10 weist auch eine Leitung oder einen Bus als Ausgang 35 zur Ausgabe von einem Ausgangssignal auf, das einen vorhandenen Fehler im geprüften textilen Gebilde anzeigt.

Fig. 3 zeigt eine vergrösserte Ansicht eines Teils der Vorrichtung wie sie Fig. 1 gezeigt ist. Es sind wieder die bekannten Elemente wie das Gewebe 2 und die Ein/Ausgabeeinheit 5 mit Tasten 6 und der Anzeigeeinheit 7 zu sehen. In einem Bereich 21 der Vorrichtung 3 ist ein Einzug 22 zum Einführen eines festen Datenträgers 23 wie ein Blatt Papier, ein Stück Gewebe oder Kunststoff als Instruktionsträger für die Vorrichtung 3 angeordnet. Ein solcher Instruktionsträger kann manuell dem Einzug 22 zugeführt werden oder er kann am Gewebe 2 befestigt werden und somit ohne den Einzug 22 zu benützen eingeführt werden.

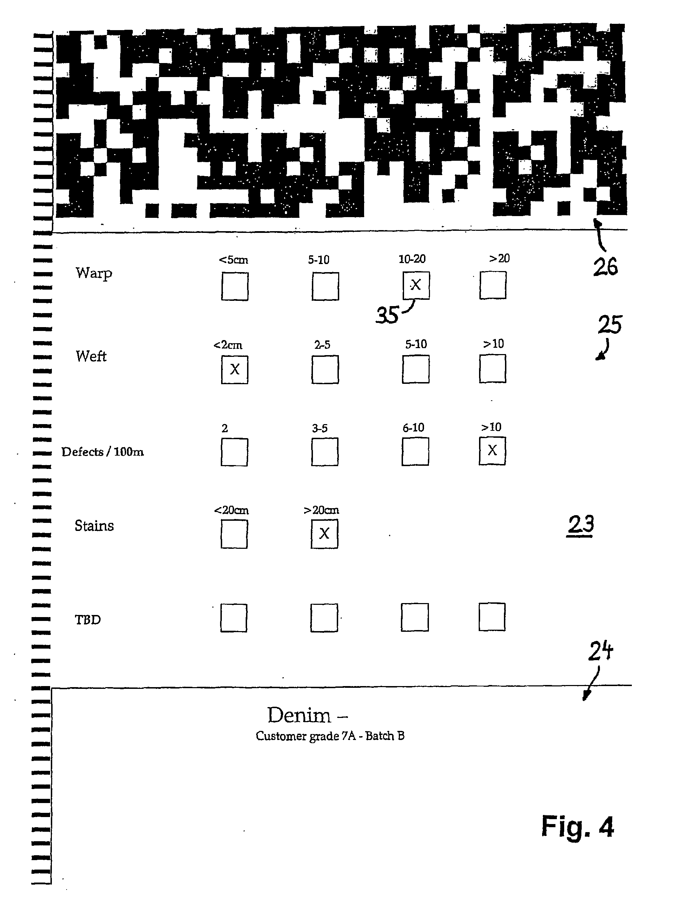

Fig. 4 zeigt eine Seite eines solchen festen Datenträgers 23 oder Instruktionsträgers, die in mehrere Bereiche 24, 25, 26 aufgeteilt sein kann, wobei jeder Bereich Informationen einer anderen Art enthält. Beispielsweise kann der Bereich 24 Angaben enthalten, die durch das menschliche Auge zu lesen sind. Solche Angaben sollen vom Bedienpersonal der Vorrichtung gelesen werden und können sich auf eine spezielle Art des textilen Gebildes, auf einen Kunden, eine Zeit, eine Webmaschine usw. beziehen. Der Bereich 25 kann Angaben über eine bestimmte Art des textilen Gebildes, wie hier offensichtlich eines Gewebes, über Fehlerarten, über vorausgehende Behandlungen usw. enthalten. Der Bereich 25 kann auch Instruktionen enthalten, die durch den Sensor 8 gelesen werden können. Der Bereich 26 kann numerische oder grafische Angaben über Parameter enthalten, die für den Prozessor 16 (Fig. 2) vorgegeben sind. Es ist auch möglich noch weitere Bereiche z.B. mit Bildern vorzusehen. Solche Bilder könnten auch verschiedene Fehlerarten im textilen Gebilde zeigen.

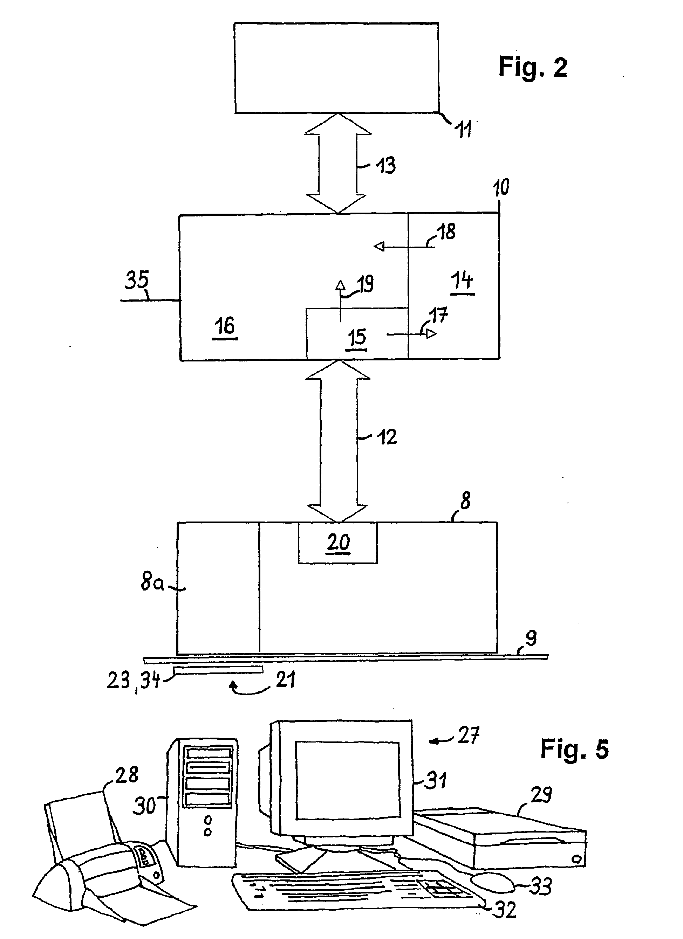

Fig. 5 zeigt mögliche Geräte, die für die Bereitstellung des festen Datenträgers 23, wie er z.B. in Fig. 4 gezeigt ist, verwendet werden können. In dieser Figur erkennt man einen Rechner (PC) 27 der mit einem Drucker 28 und einem Scanner 29 verbunden ist. Natürlich umfasst der Rechner 27 auch eine Haupteinheit 30, eine Anzeige 31, eine Tastatur 32 und eine Maus 33.

Im Betrieb und bevor man mit der Prüfung eines bestimmten textilen Gebildes, wie z.B. einem Stück Gewebe 2, beginnt, muss ein fester Datenträger 23 erstellt werden. Dieser kann ein Blatt mit Instruktionen oder ein anderes Speichermittel mit Angaben über dieses Gewebe 2 und über die Parameter, die bei der Verarbeitung der Daten, die vom Gewebe 2 gewonnen werden, sein. So ein fester Datenträger 23 mit Daten kann, z.B. durch den Hersteller der Vorrichtung 3, hergestellt oder geladen werden. Es ist möglich, vorgegebene Parameter während der Entwicklung der. Vorrichtung 3 oder während ersten Versuchen vor der Produktion zu bestimmen, indem man bekannte und mögliche Fehler, bekannte Arten textiler Gebilde und Eigenschaften der verwendeten Sensoren berücksichtigt. Sind diese vorgegebenen Parameter einmal bekannt, so werden sie in einem Satz fester Datenträger 23 abgelegt. Ein solcher Satz kann je einen festen Datenträger 23 für die meisten oder alle möglichen Arten von textilen Gebilden, die auf einer gegebenen Maschine oder von einem bestimmten Kunden hergestellt werden können, enthalten.

Eine andere Möglichkeit besteht darin, ein Werkzeug wie in Fig. 5 gezeigt, der Bedienperson einer gegeben Maschine, z. B. eines Webstuhls, zur Verfügung zustellen. Um vorgegebene Parameter zu bestimmen kann beispielsweise ein Stück Gewebe 2 auf den Scanner 29 gelegt werden wo es abgetastet wird und wobei die Resultate dem Rechner 27 übermittelt werden. Dabei kann der Rechner 27 Angaben über den Aufbau des Gewebes, wie die Dimension des verwendeten Garns, die Dichte mit der die Garne angeordnet sind, Farben oder Grauwerte, Muster oder Zeichnungen usw., erhalten. Man geht davon aus, dass Prinzipien oder Algorithmen, die die Vorrichtung 3 zur Prüfung von Signalen oder Bildern vom Gewebe 2 verwendet, bekannt sind und als Programm in diesem Rechner 27 geladen sind. Solche Programme können in der Haupteinheit 30 zusammen mit Werten für Schwellen oder andere Kriterien, die bei der Erkennung von Fehlern im Gewebe 2 verwendet werden, gespeichert sein. WO 98/08080 und WO 00/06823 offenbaren Verfahren zur Verarbeitung von Signalen von einem Gewebe und die Art mit der Schwellwerte bestimmt werden können, um eine Grenze zwischen tolerierbaren und unannehmbaren Fehlern in einem Gewebe oder einem anderen textilen Gebilde zu bestimmen. In der genannten Haupteinheit 30 sind Werte gespeichert, die bei der Anwendung von Prüfalgorithmen und für die Bestimmung von Grenzwerten benötigt werden, die bei der Erkennung von Fehlern beachtet werden müssen. Diese oben beschriebene Art Werte zu speichern ist wohlbekannt und deshalb hier nicht weiter beschrieben.

Von diesen und eventuellen weiteren Vorgaben ausgehend, die über die Tastatur 32 eingegeben werden können, wird im Rechner 27 ein Programm laufen gelassen, welches als Resultat Daten liefert, die auf einem festen Datenträger wie z.B. einem Blatt 23 mit Instruktionen gespeichert werden. Darauf sind Informationen gespeichert, die die Verarbeitungseinheit 10 benötigt und die durch den Sensor 8 der Vorrichtung 3 gelesen werden können. Eine Taste 6 auf der Ein/Ausgabeeinheit 5 kann dazu dienen, die Vorrichtung zwischen einem Betreibszustand für die normale Prüfung und einem solchen für das Laden von Informationen in den Speicher 14 der Verarbeitungseinheit 10, die durch den Sensor 8 vom festen Datenträger 23 gelesen wurden, umzuschalten. Wendet man sich nun der Fig. 2 zu, so kann man sagen, dass beim Laden, die Eingangsschnittstelle 15 Informationen, die im Wesentlichen aus Werten für Parameter bestehen, vom Bus 12 in den Speicher 14 lädt, wie dies durch den Pfeil 17 angegeben ist. Dagegen verschiebt die Eingangsschnittstelle 15 im normalen Betriebszustand Daten vom Bus 12 zum Prozessor 16 wie dies der Pfeil 19 anzeigt. In einem solchen Falle stellen die verschobenen Daten Bildpunkte mit verschiedenen Werten für Farben oder Graustufen dar, wie sie der Sensor oder eine Kamera 8 abgibt, oder, die Daten können auch andere Angaben darstellen, die durch Infrarotstrahlung oder andere Wellenlängen erzeugt werden. Das Umschalten zwischen Betriebszuständen wie in der Darstellung von Fig. 2 gezeigt, wird durch Instruktionen von der Ein/Ausgabeeinheit 11 an den Prozessor 16 ausgelöst.

Wird ein Fehler im Gewebe erkannt, so gibt es mehrere Möglichkeiten darauf zu reagieren. Ein davon besteht darin, die Webmaschine 1 anzuhalten. Eine andere besteht darin eine Anzeige in der Anzeigeeinheit 7, oder beides miteinander zu machen. Man kann auch einfach die erkannten Fehler zählen.

Typische Werte für Parameter, die im Bereich 26 (Fig. 4) des festen Datenträgers oder des Blattes 23 gespeichert sind, sind Werte, die eine Filtercharakteristik bestimmen, verschiedene Werte für Schwellwerte, wobei solche Schwellwerte je nach Struktur des vorgelegten Gewebes, Gewirkes oder Vlieses verschieden sein können usw.

Im Bereich 25 (Fig. 4) kann man Angaben über Kett- und Schussgarne, über Fehler, Flecken und andere noch zu bestimmende Angaben (TBD) machen. :Solche Angaben können durch die Bedienperson von Hand eingetragen werden. Deshalb erkennt man im Bereich 25 mehrere Felder wie Feld 35 die man mit einem Bleistift ankreuzen kann. Vorhandene oder fehlende Kreuze in den Feldern des Bereiches 25 bilden eine Gruppe Instruktionen für die Vorrichtung 3. Beispielsweise kann ein Kreuz im Feld 35 die Vorrichtung 3 anleiten, dass Fehler in der Kette die eine Länge zwischen 10 und 20 cm aufweisen nicht zu beachten sind, oder in zusätzlichen Schritten speziell verarbeitet werden sollen usw. Angaben die im Bereich 25 abgelegt sind, sollen nicht notwendigerweise im Erkennungsverfahren jedoch in nachfolgenden Schritten benützt werden, wo solche Angaben dazu beitragen können, auf erkannte Fehler zu reagieren. Beispielsweise können diese Angaben festlegen wie schnell eine solche Reaktion sein soll oder an welche Stelle Angaben über Fehler zunächst zu leiten sind, oder ob und wie eine Statistik über die erkannten Fehler zu machen ist.

Der feste Datenträger 23 der bereits beschrieben wurde und vorzugsweise aus einem Blatt Papier oder Kunststoff bestehen soll, kann auch wie eine Kreditkarte oder eine sogenannte "Smart Card" oder ein anderes elektronisches Speichermedium 34 für den Transport von Informationen ausgebildet sein. In einem solchen Falle kann der Drucker 28 durch einen Kartenschreiber oder eine andere Vorrichtung zur Ausgabe von elektronisch gespeicherten Informationen ersetzt werden und die Informationen darauf können, nicht wie in den Figuren gezeigt, unsichtbar sein. In diesem Fall kann die Information auf dem festen Datenträger 34 nicht durch den normalen Sensor 8 gelesen werden, der zum Abbilden des geprüften textilen Gebildes ausgebildet ist, sondern es braucht in der Vorrichtung 3 einen eigenen Sensor 8a, vorzugsweise in der Ein/Ausgabeeinheit 5. In diesem Falle enthält die Einheit 5 eine spezielle Schnittstelle oder Verbindung um vom festen. Datenträger 34, der wie eine Kreditkarte oder eine anderes Mittel ausgebildet ist und darin eingeführt werden kann, zu lesen oder eventuell sogar darauf zu schreiben. Der feste Datenträger 34 kann auch so ausgebildet sein, dass er Daten, die die Vorrichtung 3 oder die Einheit 5 aufgezeichnet haben, speichern kann. So kann er z.B. Angaben oder Resultate, die im Betriebszustand ermittelt wurden, speichern. Solche Angaben können sich auf Fehlerarten, die Lage von Fehlern und/oder die Zahl der Fehler beziehen und können dazu dienen, Dokumente auszudrucken wie beispielsweise Berichte, die dann ausgegeben werden, wenn der feste Datenträger wieder in die in Fig. 5 gezeigte Vorrichtung eingeführt wird. Gespeicherte Angaben können auch in einer Form ausgegeben werden, die durch das menschliche Auge vom festen Datenträger 23 gelesen werden kann. Die in Fig. 5 gezeigte Vorrichtung kann auch zur Erstellung eines elektronischen Speichermediums 34 ausgebildet und angeordnet sein, z.B. indem der Scaner 29 durch ein entsprechendes Gerät zum Lesen oder Laden der Informationen in einem Speicherchip ersetzt wird.

## Patentansprüche

1. Verfahren zur Erkennung von Fehlern in einem textilen Gebilde (2, 9) bei dem durch einen Sensor (8) erfasste Signale vom textilen Gebilde abgeleitet und die Signale vom textilen Gebilde mindestens mit vorgegebenen Parametern verarbeitet werden, **dadurch gekennzeichnet, dass**
die vorgegebenen Parameter in lesbarer Darstellung auf einem festen Datenträger (23) abgelegt werden, dass
Parameter vom festen Datenträgen vom Sensor (8) oder von einem im Sensor (8) enthaltenem weiteren Sensor (8a) gelesen werden, und für die Verwendung bei der Verarbeitung der Signale vom textilen Gebilde gespeichert werden, dass
ein textiles Gebilde (2, 9) zur Prüfung vorgelegt wird, dass durch den Sensor (8) erfasste
Signale vom textilen Gebilde abgeleitet werden und dass
die Signale vom textilen Gebilde (2, 9) mit gespeicherten Parametern aus dem festen Datenträger (23) verarbeitet werden.

2. Verfahren nach Anspruch 1, **dadurch gekennzeichnet, dass** die Parameter in numerischer oder grafischer Form auf dem festen Datenträger gespeichert werden.

3. Vorrichtung zur Erkennung von von Fehlern in einem textilen Gebilde (2, 9) mit einem Sensor (8),
einer Verarbeitungseinheit (10) und
eirier Ein/Ausgabeeinheit (11), wobei
die Verarbeitungseinheit mit dem Sensor und mit der Ein/Ausgabeeinheit verbunden und zur Verarbeitung von Signalen, die durch den Sensor am textilen Gebilde erfasst werden, mindestens mit vorgegebenen Parametern ausgebildet und angeordnet ist, und ein Ausgangssignal erzeugt, das vorhandene Fehler im textilen Gebilde anzeigt,
**gekennzeichnet durch**
einen festen Datenträger (23) der vorgegebene Parameter dem Sensor (8) oder einem im Sensor (8) enthaltenem weiteren Sensor (8a) vorlegt, und dass der Sensor (8), oder Sensor (8) umfassend einem weiteren Sensor (8a), zum Lesen der vorgegebenen Parameter vom festen Datenträger ausgebildet und angeordnet ist.

4. Vorrichtung nach Anspruch 3, **dadurch gekennzeichnet, dass** die Verarbeitungseinheit (10) einen Rechner (16), eine Eingangsschnittstelle (15), die an den Sensor (8), oder Sensor (8) umfassend einem weiteren Sensor (8a), angeschlossen ist und einen Speicher (14), zum Speichern der durch den Sensor gelesenen vorgegebenen Parameter, aufweist.

5. Vorrichtung nach Anspruch 3, **dadurch gekennzeichnet, dass** der Sensor (8), oder Sensor (8) umfassend einem weiteren Sensor (8a), als einziger Sensor ausgebildet ist, der Signale vom zu prüfenden textilen Gebilde (2, 9) erfassen und vorgegebene Parameter vom festen Datenträger (23) ablesen kann.

6. Vorrichtung nach Anspruch 3, **dadurch gekennzeichnet, dass** der feste Datenträger (23) ein Blatt mit Instruktionen ist.

7. Vorrichtung nach Anspruch 3, **dadurch gekennzeichnet, dass** der feste Datenträger (23) ein elektronisches Speichermedium ist.

8. Vorrichtung nach Anspruch 3, **dadurch gekennzeichnet, dass** auf dem festen Datenträger verschiedene Zonen (24, 25, 26) für verschiedenartige Angaben vorgesehen sind.

9. Vorrichtung nach Anspruch 8, **dadurch gekennzeichnet, dass** auf dem festen Datenträger eine Zone (26) zur Speicherung von Parametern vorgesehen ist, die bei der Verarbeitung von Signalen vom textilen Gebilde verwendet werden.

## Claims

1. Method for detecting defects in a textile structure (2, 9) by taking signals read by a sensor (8) from the textile structure and processing the signals taken from the textile structure based at least on preset parameters, **characterised by**
depositing said preset parameters in a readable representation on a physical data carrier (23),
reading parameters from said physical data carrier by sensor (8) or a special sensor (8a) comprised in sensor (8) and storing said parameters for use when processing signals taken from the textile structure,
presenting a textile structure (2, 9) to be examined,
detecting signals from the textile structure by sensor (8), and
processing signals taken from the textile structure (2, 9) using parameters stored in the physical data carrier (23).

2. Method according to claim 1, **characterised in that** the preset parameters are stored on the physical data carrier in numeric or graphic form.

3. Apparatus for detecting defects in a textile structure (2, 9) comprising:
a sensor (8),
a processing unit (10) and
an input/output unit (11), whereas
said processing unit is connected to said sensor and to said input/output unit and is designed for processing signals taken from the textile structure by the sensor at least based on preset parameters and producing an output signal indicating the presence of a defect in the textile structure,
**characterised by**
a physical data carrier (23) for presenting preset parameters to the sensor (8) or a special sensor (8a) comprised in sensor (8), and
said sensor (8) or sensor (8) comprising a special sensor (8a) being designed and arranged for reading preset parameters from the physical data carrier.

4. Apparatus according to claim 3, **characterised by** said processing unit (10) comprising a processor (16),
an input interface (15) connected to said sensor (8) or sensor (8) comprising a special sensor (8a) and
a store (14) for storing said preset parameters as read by said sensor.

5. Apparatus according to claim 3, **characterised in that** said sensor (8) or sensor (8) comprising a special sensor (8a) is designed as a single sensor for reading signals from the textile structure (2, 9) to be examined and for reading preset parameters from the physical data carrier (23).

6. Apparatus according to claim 3, **characterised in that** said physical data carrier (23) is an instruction sheet.

7. Apparatus according to claim 3, **characterised in that** said physical data carrier (23) is a electronic memory device.

8. Apparatus according to claim 3, **characterised in that** different zones (24, 25, 26) are provided on the physical data carrier each comprising a different kind of information.

9. Apparatus according to claim 8, **characterised in that** one zone (26) is provided on the physical data carrier for storing parameters for use when processing signals taken from the textile structure.

## Revendications

1. Procédé pour détecter des défauts dans une structure (2, 9) textile, dans lequel des signaux enregistrés par un capteur (8) sont déviés de la structure textile et les signaux provenant de la structure textile sont traités au moins avec des paramètres prédéfinis,
**caractérisé en ce que**
les paramètres prédéfinis sont déposés dans une représentation lisible sur un support de données (23) fixe, **en ce que**
des paramètres sont lus par le support de données fixe, par le capteur (8) ou par un autre capteur (8a) inclus dans le capteur (8), et sont stockés pour l'utilisation lors du traitement des signaux provenant de la structure textile, **en ce qu'**une structure (2, 9) textile est présentée pour le test, **en ce que** des signaux enregistrés par le capteur (8) sont déviés par la structure textile et **en ce que** les signaux provenant de la structure (2, 9) textile sont traités avec des paramètres mémorisés provenant du support de données (23) fixe.

2. Procédé selon la revendication 1, **caractérisé en ce que** les paramètres sont stockés sous forme numérique ou graphique sur le support de données fixe.

3. Dispositif pour détecter des défauts dans une structure (2, 9) textile comprenant un capteur (8), une unité de traitement (10) et une unité d'entrée/sortie (11), l'unité de traitement étant reliée au capteur et à l'unité d'entrée/sortie et réalisée et disposée au moins avec des paramètres prédéfinis pour le traitement de signaux qui sont enregistrés par le capteur sur la structure textile et générant un signal de sortie qui affiche les défauts présents dans la structure textile, **caractérisé par** un support de données (23) fixe qui remet des paramètres prédéfinis au capteur (8) ou à un autre capteur (8a) inclus dans le capteur (8), et en ce que le capteur (8) ou le capteur (8) comprenant un autre capteur (8a) est réalisé et est disposé pour la lecture des paramètres prédéfinis provenant du support de données fixe.

4. Dispositif selon la revendication 3, **caractérisé en ce** en l'unité de traitement (10) présente un ordinateur (16), une interface d'entrée (15), qui est raccordée au capteur (8) ou au capteur (8) comprenant un autre capteur (8a) et présente une mémoire (14), pour le stockage des paramètres prédéfinis et lus par le capteur.

5. Dispositif selon la revendication 3, **caractérisé en ce que** le capteur (8) ou le capteur (8) comprenant un autre capteur (8a) est conçu comme un capteur unique qui peut enregistrer des signaux provenant de la structure (2, 9) textile à tester et peut lire des paramètres prédéfinis provenant du support de données (23) fixe.

6. Dispositif selon la revendication 3, **caractérisé en ce que** le support de données (23) fixe est une feuille avec des instructions.

7. Dispositif selon la revendication 3, **caractérisé en ce que** le support de données (23) fixe est un support de stockage électronique.

8. Dispositif selon la revendication 3, **caractérisé en ce que** différentes zones (24, 25, 26) pour diverses indications sont prévues sur le support de données fixe.

9. Dispositif selon la revendication 8, **caractérisé en ce qu'**il est prévu sur le support de données fixe une zone (26) pour le stockage de paramètres qui sont utilisés pour le traitement de signaux provenant de la structure textile.
